# EUROPEAN PATENT SPECIFICATION

(11) **EP 2 045 412 B1**
(45) Date of publication and mention of the grant of the patent: **09.06.2010**
(21) Application number: 07425619.9
(22) Date of filing: 05.10.2007
(51) Int. Cl.: E04F 11/18, E04H 17/16, F16B 7/04

(54) **Modular assembly for railings**
Modulare Schienenanordnung
Ensemble modulaire pour garde-corps

(43) Date of publication of application: 08.04.2009
(73) Proprietor: Corradi S.P.A., 40128 Bologna (IT)
(72) Inventor: Grazioso, Luca, 64020 Teramo, Frazione Sant'Atto (IT)
(74) Representative: Alagem Modiano, Lara S.

(56) References cited:
- WO-A-2005/116360
- DE-B3-102004 020 637
- FR-A- 1 594 675
- FR-A- 2 717 220

## Description

The present invention relates to a modular assembly for railings.

A railing is a type of parapet constituted by metallic uprights which support closure elements which are completed at the top by a handrail.

Besides constituting a protective element against falling (balconies, terraces and windows), they can also have the simple purpose of delimiting an area.

In any case, the most interesting constructive solutions provide for the choice of shapes which have an aesthetic value and an original design.

These choices require manufacturers to perform many processes in order to convert the profiled elements that constitute the raw material into a railing having certain characteristics: these processes and the labor that is associated with them have costs which are enormously higher than those of the simple raw material.

On the other hand, storing a plurality of railings of standard sizes in appropriate storage facilities would lead to high costs related to material in stock.

The standard practice is therefore to have profiled elements which, once cut and welded, are adapted to provide any type of railing: obviously, the operations for cutting, welding and surface finishing treatment (painting, chromium plating, or others) make these products particularly expensive.

A modular assembly for railings is known from WO 2005/116360.

The aim of the present invention is to provide a modular assembly for railings which is adapted to minimize the amount of work to be performed in order to assemble the railing.

Within this aim, an object of the present invention is to provide a modular assembly for railings whose assembly does not compromise the surface characteristics of the profiled elements that are associated therewith to constitute the railing.

Another object of the present invention is to provide a modular assembly for railings which is suitable for the mutual association of portions of commercial profiled elements which are simply cut to the right size.

Another object of the present invention is to provide a modular assembly for railings which has a low cost, is relatively simple to provide in practice, and is safe in application.

This aim and these and other objects, which will become better apparent hereinafter, are achieved by the present modular assembly for railings of the type which comprises at least two profiled elements which converge so as to constitute each corner portion of a railing, characterized in that it comprises at least one skeleton provided with at least two arms, whose shape and dimensions are complementary to those of the respective converging profiled elements, which are individually suitable for stable coupling each with a respective profiled element, and at least one tension element provided with a contoured end, said skeleton comprising at least one seat, at the areas where two contiguous arms converge, which is shaped complementarily with respect to said contoured end, said seat being adapted to accommodate stably said end with consequent elastic forcing, by way of the action of the tension element, of said arms on said profiled elements.

Further characteristics and advantages of the invention will become better apparent from the following detailed description of a preferred but not exclusive embodiment of a modular assembly for railings, illustrated by way of non-limiting example in the accompanying drawings, wherein:

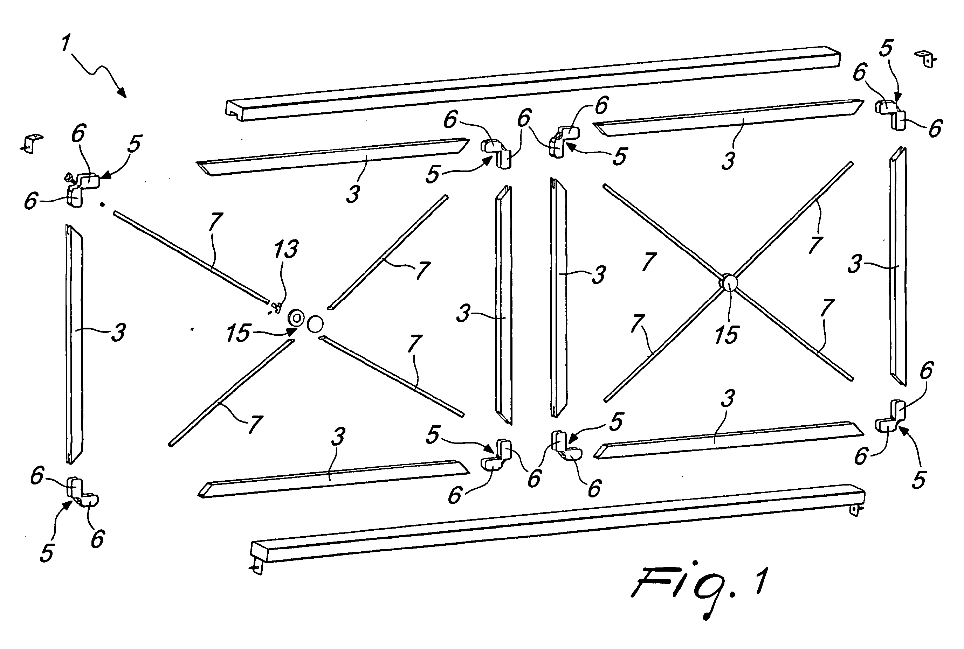

Figure 1 is an exploded perspective view of a first railing provided by means of a modular assembly according to the invention;

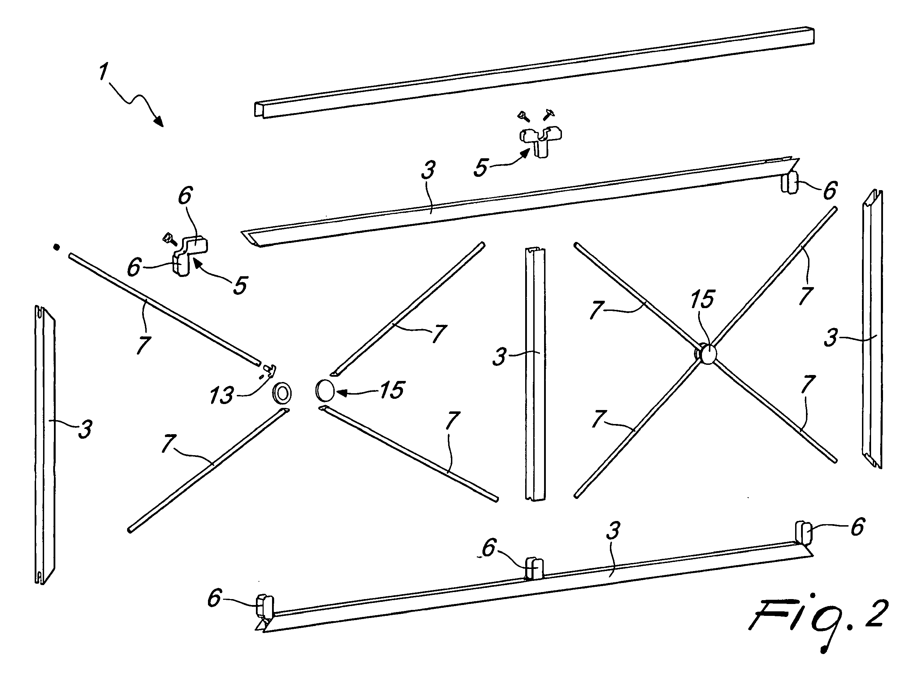

Figure 2 is an exploded perspective view of a second railing provided by means of a modular assembly according to the invention;

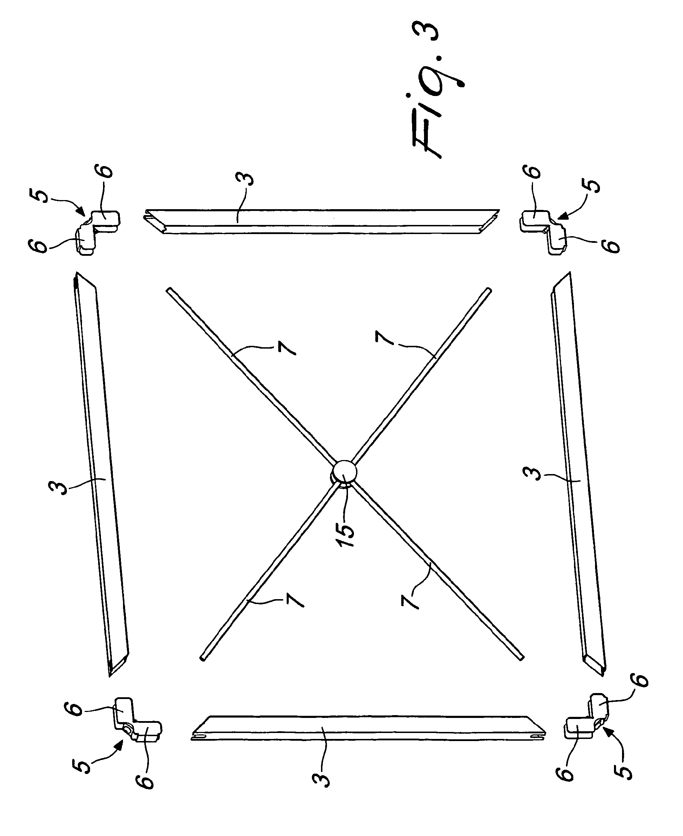

Figure 3 is an exploded perspective view of a third railing provided by means of a modular assembly according to the invention;

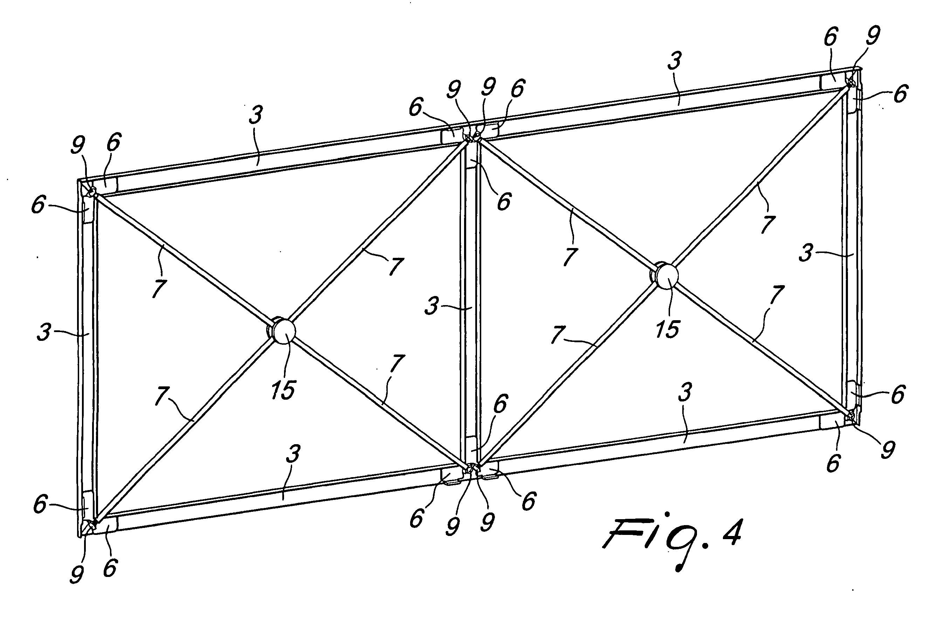

Figure 4 is a sectional perspective view, taken along a vertical plane, of a fourth railing provided by means of a modular assembly according to the invention;

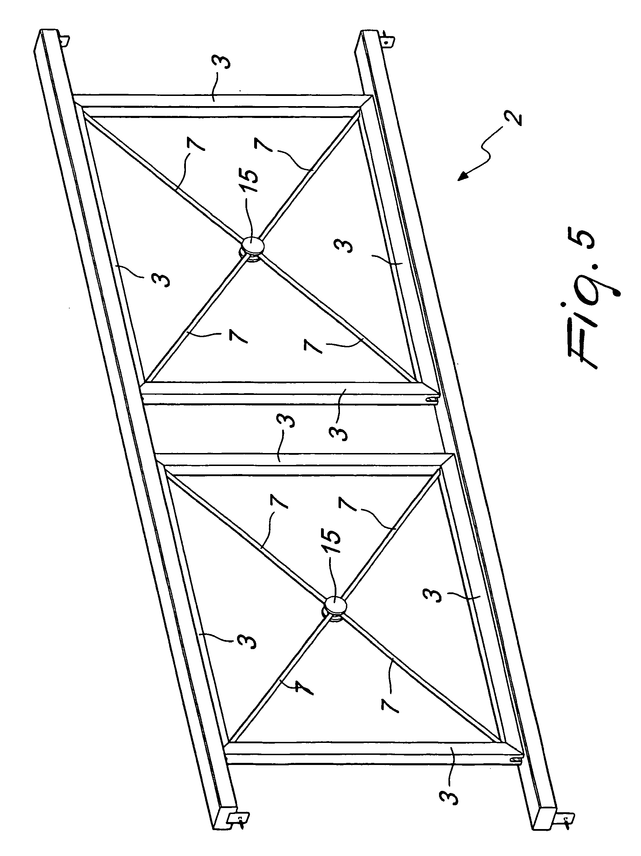

Figure 5 is a perspective view of a fifth railing provided by means of a modular assembly according to the invention;

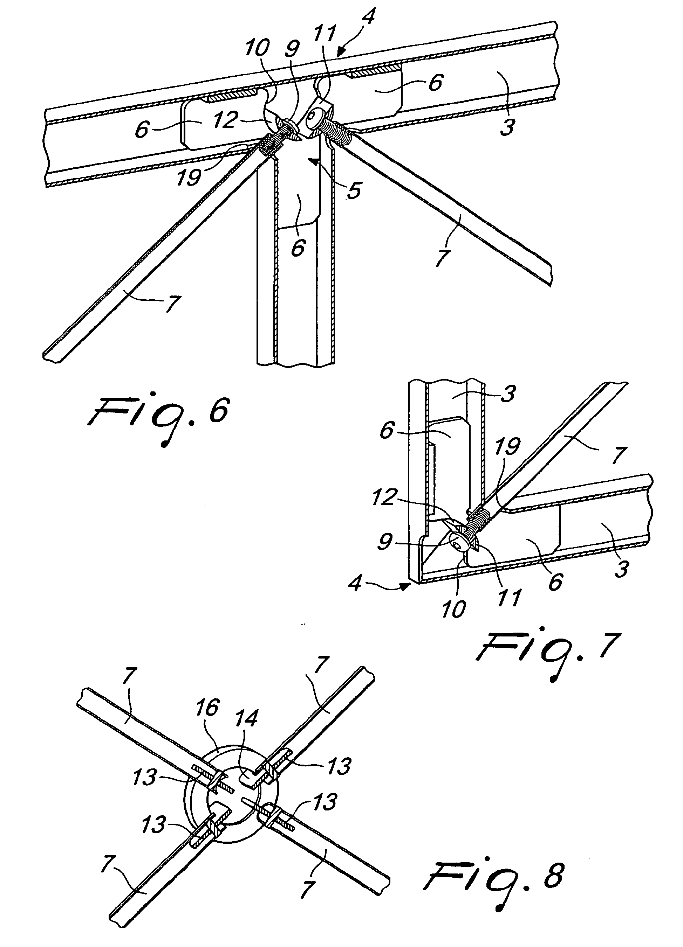

Figure 6 is a sectional perspective view of a portion of a first modular assembly according to the invention;
Figure 7 is a sectional perspective view of a portion of a second modular assembly according to the invention;
Figure 8 is a sectional perspective view of another portion of a modular assembly according to the invention;

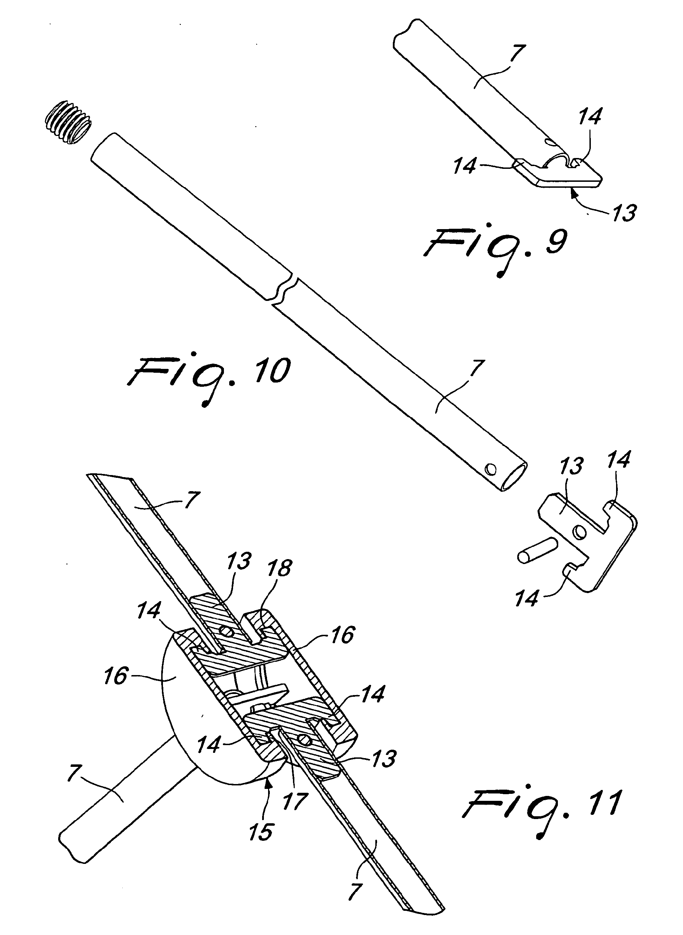

Figure 9 is a perspective view of a detail of a modular assembly according to the invention;
Figure 10 is a perspective view of a detail of a modular assembly according to the invention;
Figure 11 is a sectional perspective view of a detail of a modular assembly according to the invention.

With reference to the figures, the reference numeral 1 generally designates a modular assembly for railings 2.

The modular assembly 1 is adapted to provide railings 2 of the type which comprises at least two profiled elements 3 which converge so as to constitute each corner portion 4 of the railing 2.

The assembly 1 comprises at least one skeleton 5, which is provided with at least two arms 6, whose shape and dimensions are complementary to those of the respective converging profiled elements 3: the arms 6 are in fact individually suitable for stable coupling each with a respective profiled element 3. The purpose is to accommodate stably each individual arm 6 in a respective profiled element 3.

For this purpose, the profiled elements 3 can be substantially tubular elements which have any cross-section or rods having a C-shaped, T-shaped or double T-shaped cross-section (like beams for buildings): in the first case, the arm 6 is fully contained within the tubular profiled element 3, and in the other cases it is simply inserted within one of the concavities formed between the sides of the rod.

The assembly 1 further comprises at least one tension element 7, which has a contoured end 8: in particular, the contoured end 8 can be provided (as shown in the accompanying figures) by inserting a terminal coupling 9 within the tension element 7.

The tension element 7 is in fact advantageously constituted by a hollow shaft with a generally circular cross-section: the terminal coupling 9 can therefore be inserted in its end which is directed toward a corner portion 4.

According to a constructive embodiment of particular interest in practice and in application, the terminal coupling 9 can be constituted by a threaded element (screw or threaded bar with nut): the threads engage stably in the internal cavity of the tension element 7 (which can have a corresponding complementary thread, or simply by using couplings 9 of the self-tapping type). According to other constructive embodiments, the coupling 9 can be forced within the cavity of the tension element 7 (so that it is locked therein by interference and/or friction) or can be locked by means of transverse pins or equivalent elements.

In particular, the contoured end 8 has a terminal head which has a larger cross-section: in the particular case described previously, the head is constituted by the nut which is screwed onto the threaded bar or by the actual head of the screws that constitute the coupling 9.

The skeleton 5 comprises at least one seat 10, at the areas where two contiguous arms 6 converge, which is shaped complementarily with respect to the contoured end 8.

The seat 10 is adapted to accommodate stably the end 8 with consequent elastic forcing, by way of the action of the respective tension element 7, of the arms 6 on the profiled elements 3.

In particular, the terminal coupling 9 can accommodate (according to what is described in the accompanying figures in accordance with a possible embodiment of particular interest in application), downstream of its terminal head (in the example, the head of the screw), a plate 11 which has a curved face 12.

The curved face 12 is suitable for stable contact against the surface of the seat 10 which is formed between the arms 6: the curvatures of the seat 10 and of the curved face 12 are substantially complementary, in order to allow the alignment of the tension element 7 along any direction (a bisecting line of the angle comprised between two converging profiled elements 3) by way of the sliding (slipping) of the curved face 12 on the surface of the seat 10.

According to one exemplary embodiment, there are two arms 6, each accommodated within a respective profiled element 3.

In this case, the tension element 7 is interposed between them, and its tip is accommodated, even indirectly (following the interposition of the plate 11), in the seat 10.

According to another possible exemplary embodiment, the arms 6 are three, each accommodated within a respective profiled element 3.

In this case, the two tension elements 7 are interposed between the two pairs of converging arms 6 (symmetrically with respect to the skeleton 5) and each has its tip accommodated, even indirectly (as a consequence of the interposition of the plate 11), in the respective seat 10 which is formed between the corresponding-arms 6.

In general terms, the arms 6 can be a plurality, each accommodated within a respective profiled element 3.

The tension elements 7 also are a plurality (the number of arms 6 and tension elements 7 can coincide or not depending on the complexity of the structure to be provided), and each one is interposed between respective pairs of consecutive converging arms 6, each tension element 7 having its tip accommodated, even indirectly (as a consequence of the interposition of the plate 11), in the respective seat 10 which is formed between the corresponding arms 6.

The tension elements 7, at the end which lies opposite the end in which the terminal coupling 9 is engaged, comprise a tab 13, which is provided with elements 14 for coupling to a connecting joint 15 for at least two tension elements 7. The joint 15 is constituted by two cups 16 (which are identical and arranged mirror-symmetrically with respect to the coupling elements 14) provided with a perimetric border 17 which is adapted to form an inner peripheral receptacle 18 for the coupling elements 14.

The tabs 13 are substantially constituted by pins which are engaged on one side stably in the respective end of the tension element 7 and are provided, on the opposite side, with an anchor whose flukes 14 have dimensions and shapes which are complementary to those of the area of the joint 15 in which they are to be accommodated.

In particular, the peripheral receptacle 18 and each fluke 14 have mutually complementary shapes and dimensions, for the stable accommodation of each fluke 14 in the receptacle of the respective cup 16.

The assembly 1 according to the invention in practice allows to adopt a distinctly facilitated and simplified method for assembling the railing 2.

First of all, it is necessary to cut the profiled elements 3 to the chosen dimensions for the railing 2 so that the respective converging ends are shaped complementarily: in practice, starting from long portions of profiled elements 3, they have to be cut to size and it is necessary to create an angular face on the end portions which will converge once the railing 2 is assembled.

It is therefore necessary to provide, at these end portions, an end slot 19 on the side of each profiled element 3 from which a tension element 7 will protrude: this opening allows the passage of the tension element 7, and the smaller the dimensions of the slot 19, the better the overall visual impact of the railing 2 being provided.

It is then necessary to insert the skeleton 5 within the respective profiled elements 3, with each arm 6 inside a corresponding profiled element 3.

At the end of these steps, it is convenient to arrange a plate 11 within each seat 10 and insert in the plate 11 the respective coupling 9 which is associated with a tension element 7.

The final step of assembly provides for the coupling of the anchor (tab 13) of each tension element 7 with the receptacle 18 of the cups 16 of the joint 15, so that each tension element 7 is tensioned and forces the arms 6 of the skeleton 5 onto the internal surfaces of the profiled elements 3, rigidly coupling them to each other.

It has thus been shown that the invention achieves the intended aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A modular assembly for railings (2) of the type which comprises at least two profiled elements (3) which converge so as to constitute each corner portion (4) of a railing (2), the assembly comprising at least one skeleton (5) provided with at least two arms (6), whose shape and dimensions are complementary to those of the respective converging profiled elements (3), which are individually suitable for stable coupling each with a respective profiled element (3), and at least one tension element (7) provided with a contoured end, **characterized in that** said skeleton (5) comprises at least one seat (10), at the areas where two contiguous arms (6) converge, which is shaped complementarily with respect to said contoured end, said seat (10) being adapted to accommodate stably said end with consequent elastic forcing, by way of the action of the tension element (7), of said arms (6) on said profiled elements (3).

2. The assembly according to claim 1, **characterized in that** said arms (6) are two, each accommodated within a respective profiled element (3), and **in that** said tension element (7) is interposed between them and its tip is accommodated even indirectly within said seat (10).

3. The assembly according to claim 1, **characterized in that** said arms (6) are three, each accommodated within a respective profiled element (3), and **in that** two tension elements (7) are interposed between the two pairs of converging arms (6), each having its tip accommodated, even indirectly, in said respective seat (10) which is formed between the corresponding arms (6).

4. The assembly according to claim 1, **characterized in that** said arms (6) are a plurality, each accommodated within a respective profiled element (3), and **in that** said tension elements (7) are a plurality, each interposed between respective pairs of consecutive converging arms (6), each tension element (7) having its tip accommodated, even indirectly, in said respective seat (10) formed between the corresponding arms (6).

5. The assembly according to claim 1, **characterized in that** said contoured end comprises a terminal coupling (9) which is associated stably with the tension element (7) and is provided with a terminal head which has a larger cross-section.

6. The assembly according to claim 5, **characterized in that** said terminal coupling (9) accommodates, downstream of said terminal head, a plate (11) which has a curved face (12), said curved face (12) being suitable for stable contact against the surface of said seat (10) which is formed between said arms (6).

7. The assembly according to claim 5 or 6, **characterized in that** said tension elements (7) comprise, at the opposite end with respect to the end in which said terminal coupling (9) is engaged, a tab (13) which is provided with elements (14) for coupling to a connection joint (15) for at least two tension elements (7).

8. The assembly according to the preceding claim, **characterized in that** said joint (15) comprises two cups (16) which are provided with a perimetric border (17) which is adapted to form a peripheral internal receptacle (18) for said coupling elements (14).

9. The assembly according to the preceding claim, **characterized in that** said tab (13) is a pin which is engaged on one side stably in the respective end of said tension element (7) and is provided, on its opposite side, with an anchor whose flukes (14) have shapes and dimensions which are complementary to those of the area of the joint (15) in which they are to be accommodated.

10. The assembly according to claim 8 or 9, **characterized in that** said peripheral receptacle (18) and each of said flukes (14) have shapes and dimensions which are complementary for stably accommodating each one of said flukes (14) in the receptacle (18) of the respective cup (16).

11. A method for assembling a railing (2), which comprises the assembly (1) according to one or more of the preceding claims, and comprising the steps of:
- cutting the profiled elements (3) to the chosen dimensions for the railing (2), so that the respective converging ends are shaped complementarily;
- providing an end slot (19) on the side of each profiled element (3) from which a said tension element (7) will protrude;
- inserting said skeleton (5) within the respective profiled elements (3), with each arm (6) within a corresponding profiled element (3);
- arranging a plate (11) within each seat (10) and interlocking in the plate (11) the respective coupling (9) which is associated with a tension element (7);
- coupling the anchor or tab (13) of each tension element (7) to the receptacle (18) of the cups (16) of the joint (15) so that each tension element (7) is tensioned and forces the arms (6) of the skeleton (5) onto the internal surfaces of the profiled elements (3), rigidly coupling them to each other.

## Patentansprüche

1. Ein modularer Aufbau für Geländer (2) von der Art, die mindestens zwei profilierte Elemente (3) umfasst, welche so zusammenlaufen, dass sie jeden Eckabschnitt (4) eines Geländers (2) bilden, wobei der Aufbau mindestens ein Gerüst (5) umfasst, das mit mindestens zwei Armen (6) ausgestattet ist, deren Form und Maße komplementär zu denjenigen der entsprechenden zusammenlaufenden profilierten Elemente (3) sind, die einzeln zur stabilen Kopplung jeweils mit einem entsprechenden profilierten Element (3) geeignet sind, und mindestens ein Spannungselement (7), das mit einem konturierten Ende versehen ist, **dadurch gekennzeichnet, dass** das Gerüst (5) in den Bereichen, an denen zwei benachbarte Arme (6) zusammenlaufen, mindestens einen Sitz (10) umfasst, welcher komplementär zu dem konturierten Ende geformt ist, wobei der Sitz (10) ausgebildet ist, um das Ende stabil aufzunehmen, mit folgendem elastischen Druck der Arme (6) an den profilierten Elementen (3), der durch die Wirkung des Spannungselements (7) erfolgt.

2. Der Aufbau gemäß Anspruch 1, **dadurch gekennzeichnet, dass** die Arme (6) zwei sind, jeweils in einem entsprechenden profilierten Element (3) aufgenommen, und dadurch, dass das Spannungselement (7) zwischen ihnen angeordnet ist und seine Spitze selbst indirekt innerhalb des Sitzes (10) untergebracht ist.

3. Der Aufbau gemäß Anspruch 1, **dadurch gekennzeichnet, dass** die Arme (6) drei sind, jeweils in einem entsprechenden profilierten Element (3) aufgenommen, und dadurch, dass zwei Spannungselemente (7) zwischen den beiden Paaren zusammenlaufender Arme (6) angeordnet sind, deren Spitze jeweils, selbst indirekt, in dem entsprechenden Sitz (10) untergebracht ist, welcher zwischen den entsprechenden Armen (6) geformt ist.

4. Der Aufbau gemäß Anspruch 1, **dadurch gekennzeichnet, dass** die Arme (6) eine Vielzahl sind, jeweils untergebracht in einem entsprechenden profilierten Element (3), und dadurch, dass die Spannungselemente (7) eine Vielzahl sind, jeweils zwischen entsprechenden Paaren aufeinander folgender zusammenlaufender Arme (6) angeordnet, wobei die Spitze jedes Spannungselements (7), selbst indirekt, in dem entsprechenden Sitz (10) untergebracht ist, der zwischen den entsprechenden Armen (6) geformt ist.

5. Der Aufbau gemäß Anspruch 1, **dadurch gekennzeichnet, dass** das konturierte Ende eine End-Kopplung (9) umfasst, die stabil mit dem Spannungselement (7) verbunden ist und mit einem End-Kopf versehen ist, der einen größeren Querschnitt hat.

6. Der Aufbau gemäß Anspruch 5, **dadurch gekennzeichnet, dass** die End-Kopplung (9) stromabwärts von dem End-Kopf eine Platte (11) aufnimmt, die eine gekrümmte Fläche (12) hat, wobei die gekrümmte Fläche (12) geeignet ist für stabilen Kontakt gegen die Oberfläche des Sitzes (10), der zwischen den Armen (6) geformt ist.

7. Der Aufbau gemäß Anspruch 5 oder 6, **dadurch gekennzeichnet, dass** die Spannungselemente (7) an dem Ende, das dem Ende gegenüberliegt, in welches die End-Kopplung (9) eingreift, eine Lasche (13) umfassen, die mit Elementen (14) zur Kopplung mit einem Verbindungsstück (15) für mindestens zwei Spannungselemente (7) versehen ist.

8. Der Aufbau gemäß dem obigen Anspruch, **dadurch gekennzeichnet, dass** das Verbindungsstück (15) zwei Töpfe (16) umfasst, welche mit einem perimetrischen Rand (17) versehen sind, der ausgebildet ist, um eine periphere innere Aufnahme (18) für die Kopplungselemente (14) zu bilden.

9. Der Aufbau gemäß dem obigen Anspruch, **dadurch gekennzeichnet, dass** die Lasche (13) ein Stift ist, der auf einer Seite stabil in das entsprechende Ende des Spannungselements (7) eingreift und auf seiner gegenüberliegenden Seite mit einem Anker versehen ist, dessen Flunken (14) Formen und Maße haben, die komplementär zu denjenigen des Bereichs des Verbindungsstücks (15) sind, in dem sie aufgenommen werden sollen.

10. Der Aufbau gemäß Anspruch 8 oder 9, **dadurch gekennzeichnet, dass** die periphere Aufnahme (18) und jede der Flunken (14) Formen und Maße haben, die komplementär sind, um jede der Flunken (14) stabil in der Aufnahme (18) des entsprechenden Topfes (16) aufzunehmen.

11. Ein Verfahren zum Zusammenbau eines Geländers (2), das den Aufbau (1) gemäß einem oder mehreren der obigen Ansprüche umfasst und folgende Schritte umfasst:
- Zuschneiden der profilierten Elemente (3) auf die für das Geländer (2) gewählten Maße, so dass die entsprechenden zusammenlaufenden Enden komplementär geformt sind,
- Bereitstellung eines Endschlitzes (19) an der Seite jedes profilierten Elements (3), aus dem ein Spannungselement (7) herausragt,
- Einsetzen des Gerüstes (5) in die entsprechenden profilierten Elemente (3), mit jedem Arm (6) in einem entsprechenden profilierten Element (3),
- Anordnung einer Platte (11) in jedem Sitz (10) und Verblockung der entsprechenden Kopplung (9), die mit einem Spannungselement (7) verbunden ist, in der Platte (11),
- Kopplung des Ankers oder der Lasche (13) jedes Spannungselements (7) mit der Aufnahme (18) des Topfes (16) des Verbindungsstücks (15), so dass jedes Spannungselement (7) gespannt wird und die Arme (6) des Gerüstes (5) auf die inneren Oberflächen der profilierten Elemente (3) drückt und sie so starr miteinander koppelt.

## Revendications

1. Ensemble modulaire pour garde-corps (2) du type qui comprend au moins deux élément profilés (3) qui convergent afin de constituer chaque partie de coin (4) d'un garde-corps (2), l'ensemble comprenant au moins une carcasse (5) comportant au moins deux bras (6), dont la forme et les dimensions sont complémentaires de celles des éléments profilés (3) convergents respectifs, qui sont chacun individuellement appropriés pour un couplage stable avec un élément profilé (3) respectif, et au moins un élément de tension (7) comportant une extrémité profilée, **caractérisé en ce que** ladite carcasse (5) comprend au moins un siège (10), dans les zones où les deux bras contigus (6) convergent, qui est formé de manière complémentaire par rapport à ladite extrémité profilée, ledit siège (10) étant adapté pour loger de manière stable ladite extrémité avec une force élastique conséquente, par action de l'élément de tension (7), desdits bras (6) sur lesdits éléments profilés (3).

2. Ensemble selon la revendication 1, **caractérisé en ce que** lesdits bras (6) sont au nombre de deux, chacun logé à l'intérieur d'un élément profilé (3) respectif, et **en ce que** ledit élément de tension (7) est intercalé entre eux et sa pointe est logée même indirectement à l'intérieur dudit siège (10).

3. Ensemble selon la revendication 1, **caractérisé en ce que** lesdits bras (6) sont au nombre de trois, chacun logé à l'intérieur d'un élément profilé (3) respectif, et **en ce que** deux éléments de tension (7) sont intercalés entre les deux paires de bras convergents (6), chacun ayant sa pointe logée, même indirectement, dans ledit siège (10) respectif qui est formé entre les bras (6) correspondants.

4. Ensemble selon la revendication 1, **caractérisé en ce que** lesdits bras (6) sont une pluralité, chacun logé à l'intérieur d'un élément profilé (3) respectif, et **en ce que** lesdits éléments de tension (7) sont une pluralité, chacun intercalé entre des paires respectives de bras convergents (6) consécutifs, chaque élément de tension (7) ayant sa pointe logée, même indirectement, dans ledit siège (10) respectif formé entre les bras (6) correspondants.

5. Ensemble selon la revendication 1, **caractérisé en ce que** ladite extrémité profilée comprend un raccord terminal (9) qui est associé de manière stable à l'élément de tension (7) et comporte une tête terminale qui a une section transversale plus grande.

6. Ensemble selon la revendication 5, **caractérisé en ce que** le raccord terminal (9) loge, en aval de ladite tête terminale, une plaque (11) qui a une face incurvée (12), ladite face incurvée (12) étant appropriée pour un contact stable contre la surface dudit siège (10) qui est formée entre lesdits bras (6).

7. Ensemble selon la revendication 5 ou 6, **caractérisé en ce que** lesdits éléments de tension (7) comprennent, à l'extrémité opposée par rapport à l'extrémité dans laquelle ledit raccord terminal (9) est en prise, une languette (13) qui comporte des éléments (14) pour se coupler à un joint de raccordement (15) pour au moins deux éléments de tension (7).

8. Ensemble selon la revendication précédente, **caractérisé en ce que** ledit joint (15) a deux cupules (16) qui comportent une bordure périmétrale (17) qui est adaptée pour former un réceptacle interne périphérique (18) pour lesdits éléments de couplage (14).

9. Ensemble selon la revendication précédente, **caractérisé en ce que** ladite languette (13) est une broche qui est engagée sur un côté de manière stable dans l'extrémité respective dudit élément de tension (7) et comporte, sur son côté opposé, un ancrage dont les pattes (14) ont des formes et des dimensions qui sont complémentaires à celles de la surface du joint (15) dans laquelle elles doivent être logées.

10. Ensemble selon la revendication 8 ou 9, **caractérisé en ce que** ledit réceptacle périphérique (18) et chacune desdites pattes (14) ont des formes et des dimensions qui sont complémentaires pour loger de manière stable chacune desdites pattes (14) dans le réceptacle (18) de la cupule (16) respective.

11. Procédé pour assembler un garde-corps (2), qui comprend l'ensemble (1) selon une ou plusieurs des revendications précédentes, et comprenant les étapes consistant à :
couper les éléments profilés (3) aux dimensions choisies pour le garde-corps (2), de sorte que les extrémités convergentes respectives sont formées de manière complémentaire ;
prévoir une fente d'extrémité (19) du côté de chaque élément profilé (3) à partir duquel ledit élément de tension (7) fait saillie ;
insérer ladite carcasse (5) à l'intérieur des éléments profilés (3) respectifs, avec chaque bras (6) à l'intérieur d'un élément profilé (3) correspondant ;
agencer une plaque (11) à l'intérieur de chaque siège (10) et bloquer dans la plaque (11) le raccord(9) respectif qui est associé à un élément de tension (7) ;
coupler l'ancrage ou languette (13) de chaque élément de tension (7) au réceptacle (18) des cupules (16) du joint (15) de sorte que chaque élément de tension (7) est tendu et force les bras (6) de la carcasse (5) sur les surfaces internes des éléments profilés (3) les couplant ainsi rigidement les uns aux autres.
